# FASCICULE DE BREVET EUROPEEN

(11) **EP 3 725 003 B1**
(45) Date de publication et mention de la délivrance du brevet: **05.04.2023**
(21) Numéro de dépôt: 18815247.4
(22) Date de dépôt: 14.12.2018
(51) Int. Cl.: H04B 5/00, G01V 3/10, G01V 3/12, G01V 3/16

(54) **DÉTECTEUR DOUBLE TECHNOLOGIE À BOBINES TRANSVERSES**
DOPPELDETEKTOR MIT QUERSPULEN
DUAL DETECTOR WITH TRANSVERSE COILS

(30) Priorité: 15.12.2017 FR 1762289
(43) Date de publication de la demande: 21.10.2020
(73) Titulaire: Manneschi, Alessandro, 52100 Arezzo (IT)
(72) Inventeur: Manneschi, Alessandro, 52100 Arezzo (IT)
(74) Mandataire: Regimbeau
(86) Numéro de dépôt international: PCT/EP2018/085038
(87) Numéro de publication internationale: WO 2019/115798

(56) Documents cités:
- WO-A2-2012/024133
- US-A- 3 758 849
- US-B1- 9 733 353

## Description

### DOMAINE DE L'INVENTION

L'invention concerne le domaine de la détection d'objets cibles, et plus particulièrement de la détection de charges explosives tels que des mines terrestres enfouies dans le sol.

### ARRIERE-PLAN TECHNOLOGIQUE

Afin de détecter des charges explosives, il est connu d'utiliser des détecteurs double technologies (« dual detector » en anglais) comprenant une tête de détection logeant un capteur inductif et un radar à pénétration de sol, dans la mesure où ces technologies sont complémentaires quant aux types de matériaux détectés (métaux pour le capteur inductif vs. différences de constantes diélectriques des matériaux et position relative pour le radar).

A l'usage, le Demandeur s'est cependant aperçu du fait que le sol n'était pas neutre du point de vue électromagnétique et peut donc perturber le couplage entre les bobinages. En outre, le sol est rarement uniformément magnétique, de sorte que, pendant le balayage du sol avec le détecteur par un opérateur, le signal détecter peut ne varier qu'en raison de la présence de débris métalliques ou de la composition même du sol, voire même déclencher de fausses alarmes.

Par ailleurs, les opérateurs utilisant ces détecteurs peuvent être insuffisamment formés et ne pas tenir correctement le détecteur ou d'effectuer un mouvement de balayage inapproprié. La tête de détection peut alors former un angle latéral avec le sol, de sorte que l'une des bobines se trouve plus proche du sol que l'autre des bobines, ce qui crée une forte modulation du signal et risque donc de déclencher de fausses alarmes. Et quand bien même l'opérateur serait bien formé et essayerait de maintenir la tête de détection sensiblement parallèle au sol en tout point du mouvement de balayage, il ne peut modifier localement son inclinaison pour tenir compte des irrégularités du sol.

Afin de pallier ces difficultés, les fabricants ont tendance à réduire la sensibilité de ces détecteurs. Le risque cependant est de ne plus pouvoir détecter des cibles enfouies dans le sol et donc de mettre en péril la vie des opérateurs.

Le document US 3 758 849 décrit un procédé de détection d'un objet cible à l'aide d'un détecteur comprenant une tête de détection comprenant un capteur inductif comprenant une bobine émettrice et une bobine réceptrice distinctes. La bobine émettrice et la bobine réceptrice forment une zone de couplage.

Toutefois, le détecteur est fixe et c'est l'objet à scanner qui se déplace devant lui suivant une direction de scannage. Le détecteur n'effectue donc pas de balayage du sol. De plus, il ne s'agit pas d'un détecteur double technologie, c'est-à-dire un détecteur comprenant au moyen de détection supplémentaire en plus du capteur inductif.

Le document US 9 733 353 décrit un détecteur comprenant une unique boucle de détection.

Le document WO 2012/024133 décrit un détecteur comprenant un capteur inductif formé d'une bobine réceptrice et une bobine émettrice positionnées de sorte à former une barre traversante et des antennes radar en forme de V.

### RESUME DE L'INVENTION

Un objectif de l'invention est donc de proposer un détecteur comprenant une tête de détection logeant un capteur inductif et un autre capteur, tel qu'un radar à pénétration de sol, qui soit capable de réduire les fausses alarmes susceptibles d'être générées lors du balayage d'un sol avec le détecteur tout présentant une sensibilité plus élevée.

Pour cela, l'invention propose un procédé de détection d'un objet cible à l'aide d'un détecteur, ledit détecteur comprenant une tête de détection comprenant un capteur inductif comprenant une bobine émettrice et une bobine réceptrice distinctes, la bobine émettrice et la bobine réceptrice formant chacune une boucle, la boucle de la bobine émettrice chevauchant au moins partiellement la boucle de la bobine réceptrice de manière à former une zone de couplage, la zone de couplage étant allongée suivant une première direction longitudinale définissant un premier axe. Le détecteur est déplacé le long d'une direction de balayage définissant un axe de balayage et en ce que, au cours de ce déplacement, la tête de détection est orientée de sorte que le premier axe de la zone de couplage est sensiblement parallèle à l'axe de balayage.

Selon un deuxième aspect, l'invention propose un détecteur adapté pour être utilisé dans un procédé de détection comme décrit ci-dessus, ledit détecteur comprenant une tête de détection fixée sur un manche par l'intermédiaire d'une liaison mécanique, la tête de détection comprenant :
- une plateforme et
- un capteur inductif fixé sur la plateforme et comprenant une bobine émettrice et une bobine réceptrice distinctes, la bobine émettrice et la bobine réceptrice formant chacune une boucle, la boucle de la bobine émettrice chevauchant au moins partiellement la boucle de la bobine réceptrice de manière à former une zone de couplage, la zone de couplage étant allongée suivant une première direction longitudinale définissant un premier axe. Par ailleurs, le manche s'étend dans un plan normal à la plateforme et en ce que le premier axe de la zone de couplage est transversal audit plan.

Certaines caractéristiques préférées mais non limitatives du détecteur décrit ci-dessus sont les suivantes, prises individuellement ou en combinaison :
- chaque boucle étant sensiblement allongée suivant une deuxième direction longitudinale définissant un deuxième axe, le premier axe et le deuxième axe étant sensiblement parallèles.
- la tête de détection est allongée et s'étend suivant le premier axe.
- la bobine émettrice et la bobine réceptrice comprennent des fils enroulés, la bobine émettrice présentant un plus grand nombre de spires que la bobine réceptrice.
- la bobine émettrice et la bobine réceptrice sont imprimées directement sur la plateforme, la plateforme formant alors un circuit imprimé.
- la bobine émettrice et la bobine réceptrice sont homopolaires.
- la liaison mécanique est fixe en rotation autour d'un troisième axe, ledit troisième axe étant compris dans le plan.
- le troisième axe est transversal au premier axe.
- la liaison mécanique comprend une liaison pivot, une liaison encastrement ou une liaison rotule.
- Le détecteur comprend en outre une poignée configurée pour être saisie par un opérateur, ladite poignée s'étendant dans le plan.
- Le détecteur comprend en outre un radar à pénétration de sol comprenant une antenne émettrice et une antenne réceptrice, l'antenne émettrice et l'antenne réceptrice étant chacune logées au centre de l'une des boucles des bobines émettrice et réceptrice.
- l'antenne émettrice et l'antenne réceptrice du radar sont de l'un des types suivants : antenne radio à cornet à quadruple nervures, antenne papillon, antenne papillon rectangulaire, antenne spirale d'Archimède, antenne spirale logarithmique, antenne Vivaldi, antenne spirale logarithmique allongée suivant un quatrième axe perpendiculaire au premier axe.
- l'antenne émettrice et l'antenne réceptrice sont réalisées au moins en partie en nickel ou en chrome.
- une partie centrale de l'antenne émettrice et de l'antenne réceptrice est réalisée en cuivre et comprend, en surface, une couche de protection réalisée en or.
- l'antenne émettrice et l'antenne réceptrice présentent une épaisseur inférieure à un micron, de préférence égale à environ 200 nm.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

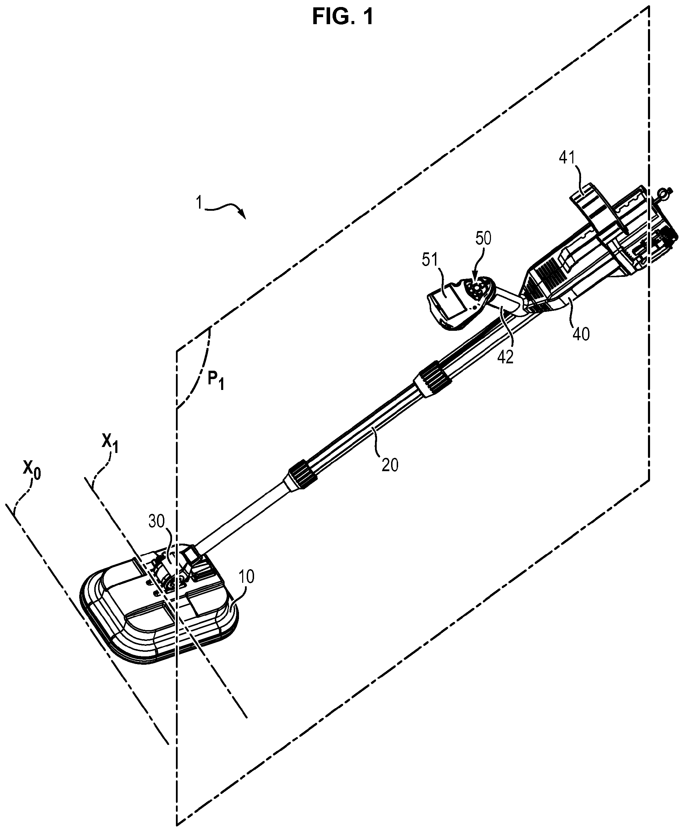

La figure 1 est une vue en perspective d'un exemple de réalisation d'un détecteur conforme à l'invention.
La figure 2 est une vue du dessus, éclatée et en perspective du détecteur de la figure 1.
La figure 3 est une vue du dessous, éclatée et en perspective, du détecteur de la figure 1.
La figure 4a illustre de manière schématique l'orientation des bobines émettrice et réceptrice d'un détecteur traditionnel en fonction de la direction de balayage droite/gauche.
La figure 4b illustre de manière schématique l'orientation des bobines émettrice et réceptrice d'un détecteur conforme à l'invention en fonction de la direction de balayage droite/gauche.
Les figures 5a et 5b illustrent l'amplitude du signal mesuré pour un détecteur traditionnel et un détecteur conforme à l'invention, respectivement, lorsque le détecteur est au contact d'un sol magnétique sur lequel une bille en acier a été posée et que le détecteur suit un mouvement de balayage droite/gauche.
Les figures 6a et 6b illustrent l'amplitude du signal mesuré pour le détecteur traditionnel et le détecteur conforme à l'invention, respectivement, lorsque le détecteur est au contact du sol magnétique dans lequel un simulateur du type LI-11 a été enfoui et que le détecteur suit un mouvement de balayage droite/gauche.
Les figures 7a et 7b illustrent l'amplitude du signal mesuré pour le détecteur traditionnel et le détecteur conforme à l'invention, respectivement, lorsque le détecteur est au contact du sol magnétique dans lequel un simulateur du type PMA-2 a été enfoui et que le détecteur suit un mouvement de balayage droite/gauche.
Les figures 8a et 8b illustrent l'amplitude du signal mesuré pour un détecteur traditionnel et un détecteur conforme à l'invention, respectivement, lorsque le détecteur est à 5 cm du sol magnétique sur lequel une bille en acier a été posée et que le détecteur suit un mouvement de balayage droite/gauche.
Les figures 9a et 9b illustrent l'amplitude du signal mesuré pour le détecteur traditionnel et le détecteur conforme à l'invention, respectivement, lorsque le détecteur est à 5 cm du sol magnétique dans lequel un simulateur du type LI-11 a été enfoui et que le détecteur suit un mouvement de balayage droite/gauche.
Les figures 10a et 10b illustrent l'amplitude du signal mesuré pour le détecteur traditionnel et le détecteur conforme à l'invention, respectivement, lorsque le détecteur est à 5 cm du sol magnétique dans lequel un simulateur du type PMA-2 a été enfoui et que le détecteur suit un mouvement de balayage droite/gauche.
Les figures 11a et 11b illustrent l'amplitude du signal mesuré pour le détecteur traditionnel et le détecteur conforme à l'invention, respectivement, lorsque le détecteur est à 5 cm du sol magnétique et que le détecteur est incliné latéralement, en statique, de 20°.
Les figures 12a et 12b illustrent l'amplitude du signal mesuré pour le détecteur traditionnel et le détecteur conforme à l'invention, respectivement, lorsque le détecteur est à 5 cm du sol magnétique et que le détecteur est incliné latéralement de 20° et suit un mouvement de balayage droite/gauche.

### DESCRIPTION DETAILLEE D'UN MODE DE REALISATION

Un détecteur 1 double technologie conforme à l'invention comprend une tête de détection 10 fixée sur un manche 20 par l'intermédiaire d'une liaison mécanique 30.

La tête de détection 10 correspond à la partie destinée à venir près du sol afin de détecter des produits cibles. Elle comprend à cet effet :
- une plateforme 11
- un capteur inductif fixé sur la plateforme 11 et comprenant une bobine émettrice 12 et une bobine réceptrice 13 distinctes, et
- au autre capteur, de préférence, un radar à pénétration de sol.

La bobine émettrice 12 et la bobine réceptrice 13 sont des bobinages homopolaires. De manière connue en soit, elles sont configurées pour émettre et recevoir des ondes ayant une fréquence comprise entre 300 Hz et 180 kHz. Elles forment chacune une boucle et sont conformées de sorte que la boucle de la bobine émettrice 12 chevauche au moins partiellement la boucle de la bobine réceptrice 13 de manière à former une zone de couplage 14. Cette configuration permet d'obtenir un capteur inductif dans lequel l'inductance mutuelle est minimale.

A titre de comparaison, par rapport à un capteur inductif comprenant une unique bobine constituant l'émetteur et le récepteur et formée de deux boucles en série de sens inversés afin de neutraliser les effets de parasites externes, l'utilisation de deux bobines 12, 13 distinctes pour la bobine émettrice 12 et la bobine réceptrice 13 permet d'amplifier le signal, et ne nécessite donc pas de diminuer le seuil de détection pour éviter les risques de fausses alarmes.

La zone de couplage est allongée suivant une première direction longitudinale qui définit un premier axe X1. Afin de réduire encore les risques de fausses alarmes et d'augmenter en parallèle la sensibilité du détecteur 1, le capteur inductif est positionné de sorte que, en utilisation, le manche 20 s'étend dans un plan P₁ normal à la plateforme 11 sur laquelle sont fixés les bobines émettrice et réceptrice 12, 13 et le premier axe X₁ de la zone de couplage 14 est transversal audit plan P₁.

Par « transversal » on comprendra ici que le premier axe X₁ forme un angle compris entre 70° et 110° avec le plan P₁, de préférence de l'ordre de 90°. Par ailleurs, la boucle de la bobine émettrice 12 et la boucle de la bobine réceptrice 13 étant de forme symétrique, le premier axe X₁ passe par les points 14a, 14b d'intersections des deux boucles.

Par « direction longitudinale » d'une pièce ou d'un élément, on comprendra ici la direction dans laquelle la pièce ou l'élément présente sa plus grande dimension.

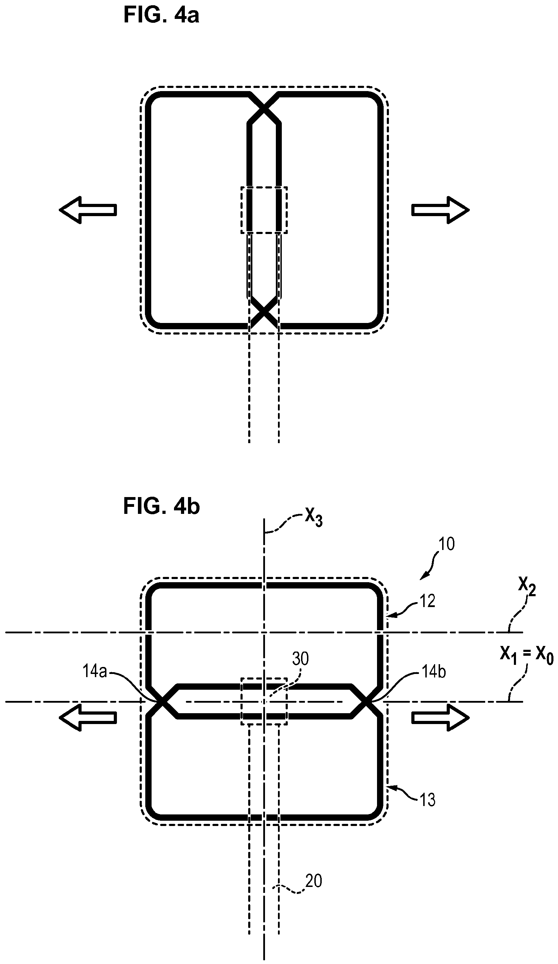

En d'autres termes, lors du balayage du sol par un opérateur, qui se fait suivant un mouvement de balayage droite/gauche définissant un axe de balayage X₀, c'est-à-dire perpendiculairement à la direction d'avancement de l'opérateur, la tête de détection 10 est orientée de sorte que la zone de couplage 14 se trouve sensiblement alignée avec la direction du mouvement de balayage. De la sorte, à tout instant, la bobine émettrice 12 et la bobine réceptrice 13 se trouve à une distance sensiblement égale du sol, même en cas d'inclinaison de la tête de détection 10 et/ou d'irrégularités du sol, ce qui réduit sensiblement les risques de fausse alarme. De plus, grâce à cette nouvelle orientation, les déchets métalliques se trouvant sur le sol ne traversent pas nécessairement la zone de couplage 14, contrairement au cas du détecteur traditionnel (figure 4a) où la zone de couplage 14 est transversale à l'axe de balayage X₀ et est donc nécessairement traversée.

La boucle de la bobine émettrice 12 et la boucle de la bobine réceptrice 13 sont toutes les deux allongées suivant une deuxième direction longitudinale qui définit un deuxième axe X₂. Ce deuxième axe X₂ est sensiblement parallèle au premier axe X₁. En d'autres termes, la boucle de la bobine émettrice 12, la zone de couplage 14 et la boucle de la bobine réceptrice 13 présentent une même direction longitudinale et s'étendent les unes à côté des autres.

Par ailleurs, la forme de la tête de détection 10 est adaptée à la configuration et à l'orientation spatiale des bobines émettrice et réceptrice 12, 13. Elle est donc allongée dans la même direction que les boucles et s'étend suivant une direction longitudinale qui est sensiblement parallèle au premier axe X₁.

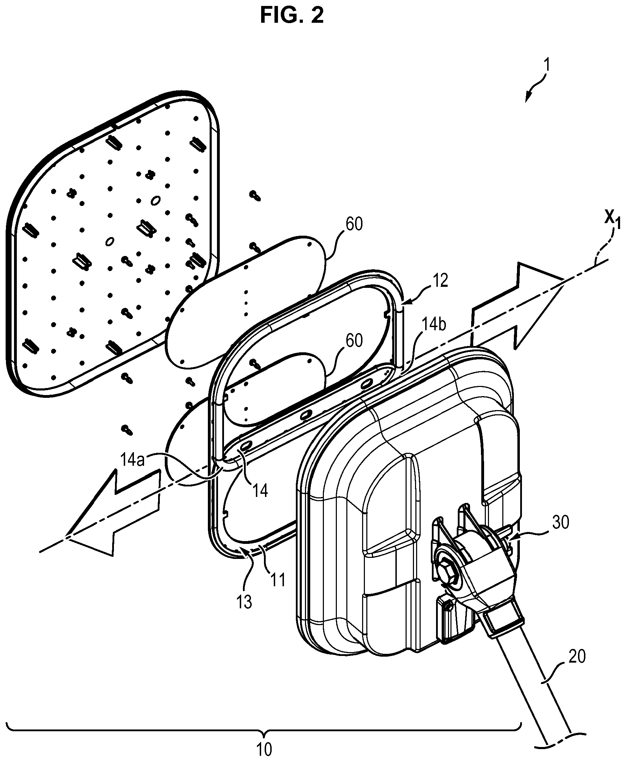

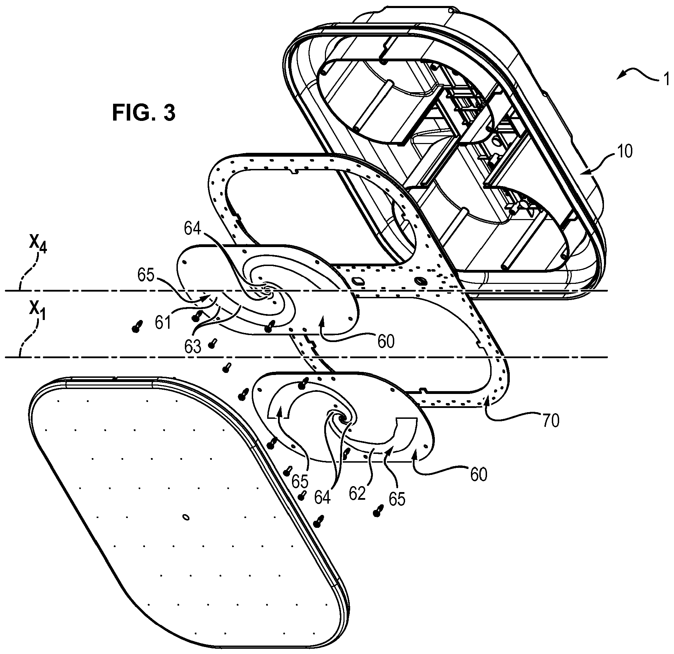

Dans une première forme de réalisation, la bobine émettrice 12 et la bobine réceptrice 13 sont imprimées directement sur la plateforme 11. La plateforme 11 et les bobines émettrice et réceptrice 12, 13 forment donc un circuit imprimé. Cette forme de réalisation présente l'avantage de réduire l'encombrement du capteur inductif dans la tête de détection 10 ainsi que le poids global du détecteur 1. Son coût n'est cependant pas négligeable. Par conséquent, dans une deuxième forme de réalisation, qui est illustrée sur les figures 2 et 3, la bobine émettrice 12 et la bobine réceptrice 13 peuvent comprendre des fils enroulés, la bobine émettrice 12 présentant un plus grand nombre de spires que la bobine réceptrice 13.

La liaison mécanique 30 peut comprendre une liaison du type encastrement, pivot ou rotule. De préférence, la liaison mécanique 30 est fixe en rotation autour d'un troisième axe X₃ qui est compris dans le plan P₁ et est perpendiculaire au premier axe X₁. En bloquant la rotation autour du troisième axe X₃, l'opérateur est incité à saisir le détecteur 1 de sorte que la zone de couplage 14 soit sensiblement parallèle à l'axe de balayage X₀ lors d'une séquence de détection.

De manière optionnelle, le détecteur 1 comprend en outre des moyens 40 pour la préhension du détecteur 1 par un opérateur. De manière habituelle, les moyens de préhension 40 peuvent comprendre un arceau 41 configuré pour recevoir à coulissement le bras de l'opérateur ainsi qu'une poignée 42 configurée pour être saisie par l'opérateur.

Dans une forme de réalisation, la poignée 42 s'étend dans le plan P₁ afin de forcer structurellement l'opérateur à positionner le détecteur 1 de sorte que la zone de couplage 14 soit orientée de manière à s'étendre sensiblement parallèle à l'axe de balayage X₀ lors d'une séquence de détection.

Le manche 20 peut être télescopique et/ou comprendre plusieurs parties distinctes configurées pour être assemblées les unes avec les autres avant d'être fixées ensemble, par exemple par vissage.

De manière connue en soi, le détecteur 1 comprend également des moyens de traitement 50 comprenant notamment un microprocesseur configuré pour traiter le signal détecté par le capteur inductif 12, 13, tel qu'une ou plusieurs cartes électroniques, une mémoire et le cas échéant des moyens d'alerte et/ou un dispositif d'affichage 51.

Les moyens de traitement 50 peuvent être logés en tout ou partie au niveau des moyens de préhension 40.

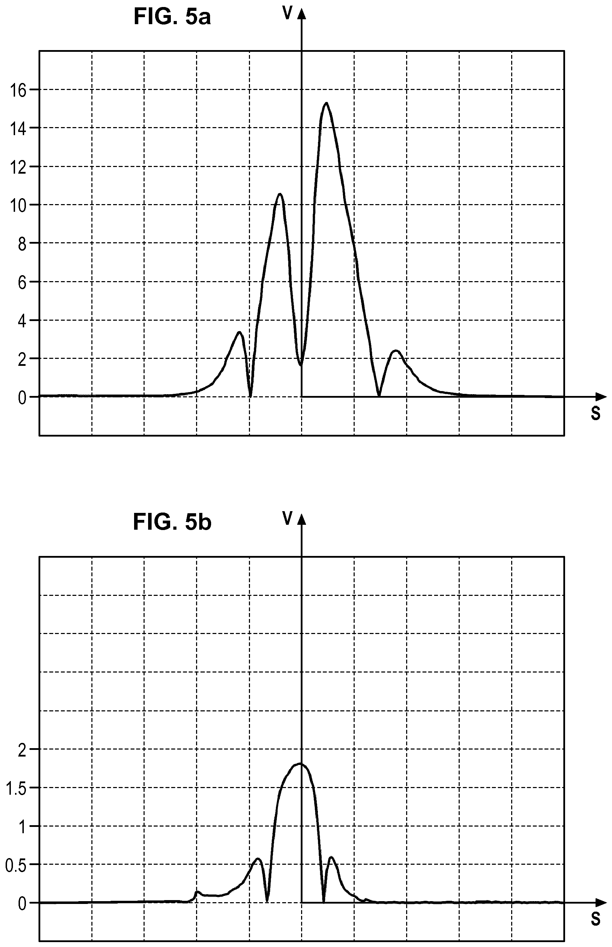

On a illustré sur les figures 5a à 10b une première série de tests comparatifs effectués d'une part avec un détecteur 1 traditionnel (figures Ya, Y ∈ [5 ; 12])., c'est-à-dire un détecteur 1 double technologie comprenant un capteur inductif ayant une bobine émettrice et une bobine réceptrice se chevauchant mais dans lequel la zone de couplage s'étend perpendiculairement à l'axe de balayage X₀, et un détecteur 1 conforme à l'invention (figures Yb, Y ∈ [5 ; 12]), c'est-à-dire dont l'axe X₁ de la bobine émettrice 12 et de la bobine réceptrice 13 est parallèle à l'axe de balayage X₀.

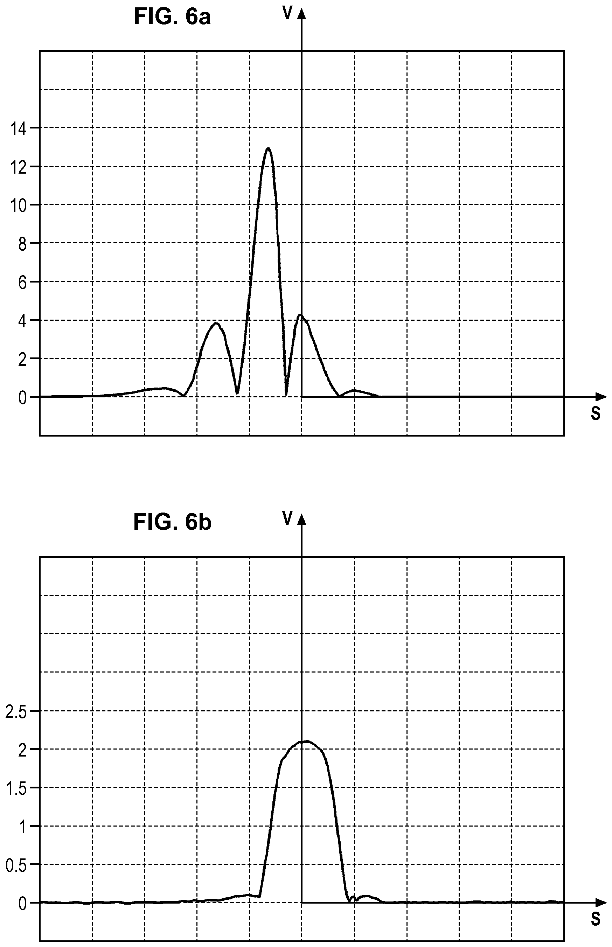

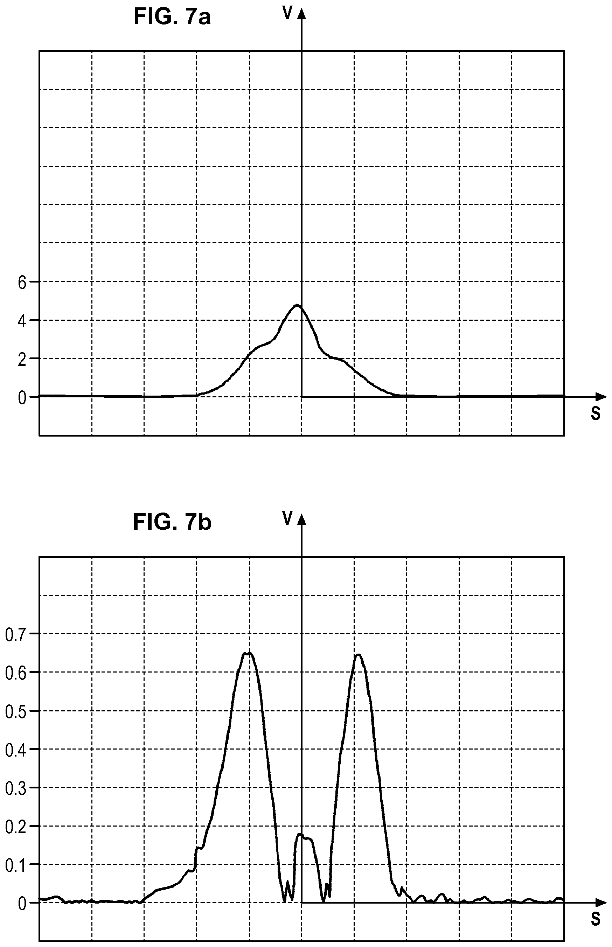

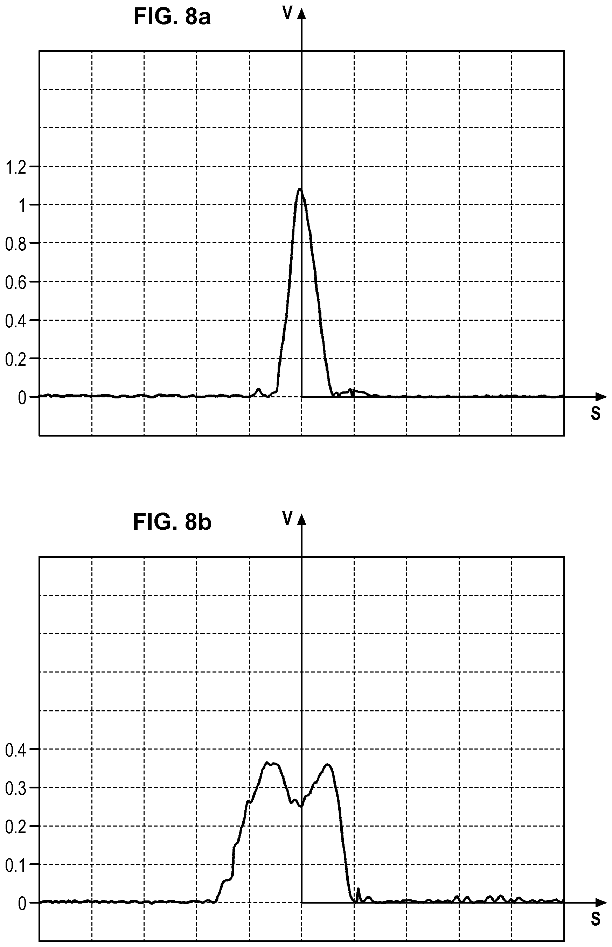

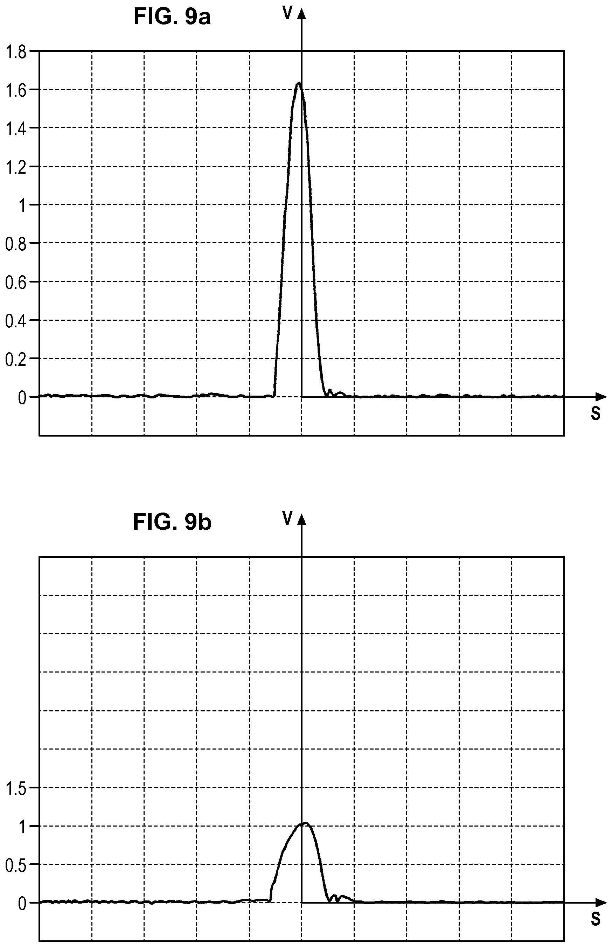

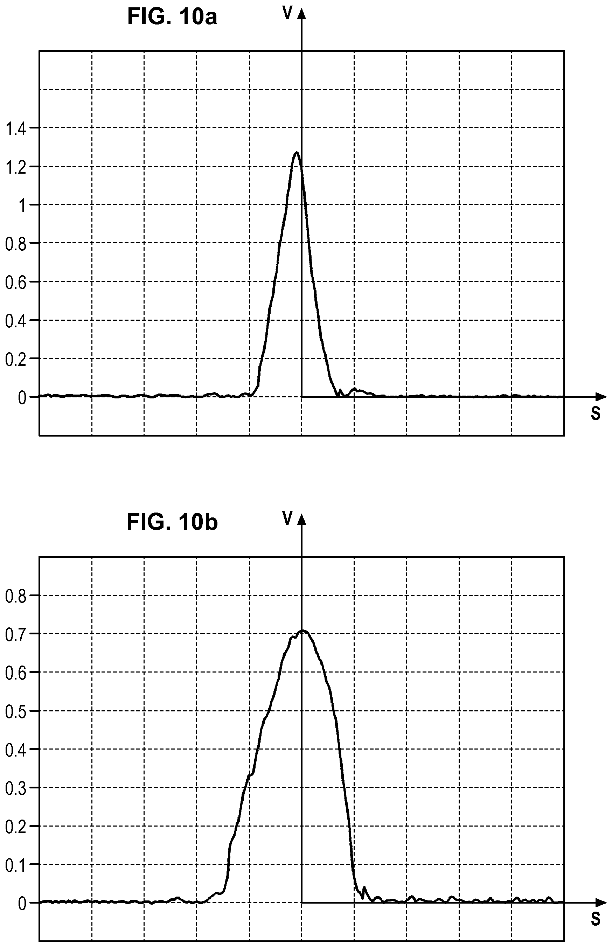

Ces tests ont été effectués sur un sol magnétique. Dans un premier cas (figures 5a, 5b, 8a et 8b), une bille en acier présentant un diamètre de 6.5 mm a été placée sur le sol magnétique. Dans un deuxième cas (figures 6a, 6b, 9a et 9b) un simulateur de détonateur de type LI-11 a été enfoui dans le sol magnétique. Dans un troisième cas (figures 7a, 7b, 10a et 10b), un simulateur de détonateur de type PMA-2 a été enfoui dans le sol magnétique.

La tête de détection 10 a été passée suivant un mouvement de balayage droite/gauche conforme au mouvement recommandé aux opérateurs sur le terrain. Par mouvement de balayage droite/gauche, on comprendra ici un mouvement latéral, c'est-à-dire suivant un axe de balayage X₀ qui est perpendiculaire au plan P₁ dans lequel s'étend le manche 20.

Dans cette première série de tests, lors du mouvement de balayage, la tête de détection 10 est placée au contact du sol (0 cm - figures 5a à 7b) puis à 5 cm du sol (figures 8a à 10b). L'intensité du signal de détection a été enregistré à chaque mouvement de balayage (de la droite vers la gauche).

Les résultats des mesures effectuées pour les trois cas, avec le détecteur traditionnel et le détecteur 1 conforme à l'invention, à 0 cm et 5 cm, sont résumés dans le tableau ci-dessous :

**Tableau 1**

| | **Détecteur traditionnel Amplitude du signal** | | | **Détecteur 1 de l'invention Amplitude du signal** | | | **Amelioration** |
|---|---|---|---|---|---|---|---|
| | **à 0 cm** | **à 5 cm** | **Ratio** | **à 0 cm** | **à 5 cm** | **Ratio** | |
| **Cas 1: Sphère** | 15 V | 1,2 V | **12,5** | 1,7 V | 0,35 V | **4,8** | **260 %** |
| **Cas 2: LI-11** | 13 V | 1,6 V | **8,1** | 2,1 V | 1,00 V | **2,1** | **385%** |
| **Cas 3: PMA-2** | 4,5 V | 1,3 V | **3,5** | 0,65 V | 0,7 V | **0,9** | **388 %** |

Il ressort donc de cette série de tests comparatifs qu'en modifiant l'orientation de la bobine émettrice 12 et de la bobine réceptrice 13 par rapport à l'axe de balayage X₀, le rapport entre l'amplitude du signal à 0 cm (au contact du sol) et à 5 cm du sol est nettement diminué. En d'autres termes, l'influence du type de sol et des débris métalliques ou comprenant des oxydes posés sur le sol est nettement diminuée lorsque la direction de balayage est parallèle au premier axe X₁ (et donc à la direction longitudinale de la zone de couplage 14).

Cette configuration permet donc d'augmenter nettement la sensibilité de détection du détecteur 1 conforme à l'invention, puisque le type de sol et les éventuels débris ont moins d'influence sur la détection et génèrent donc moins de fausse alarme.

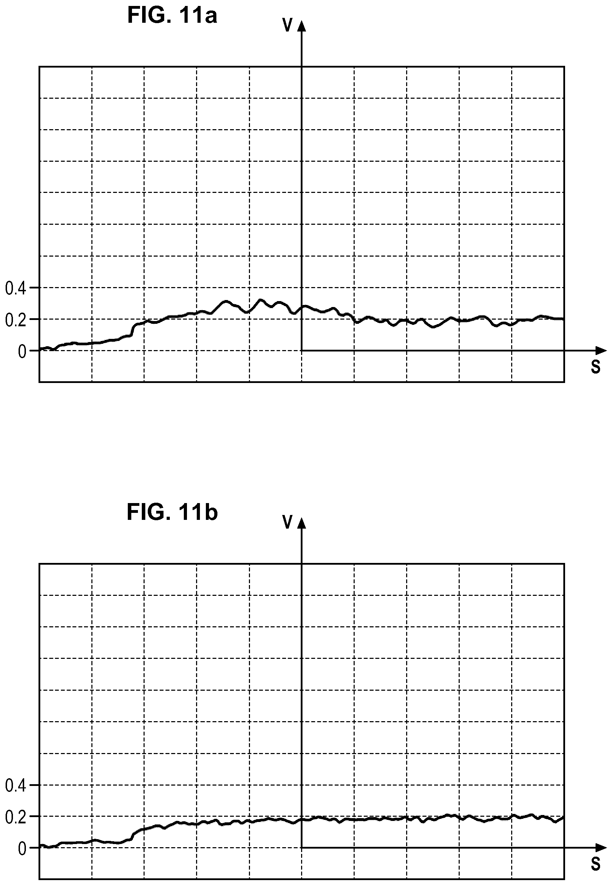

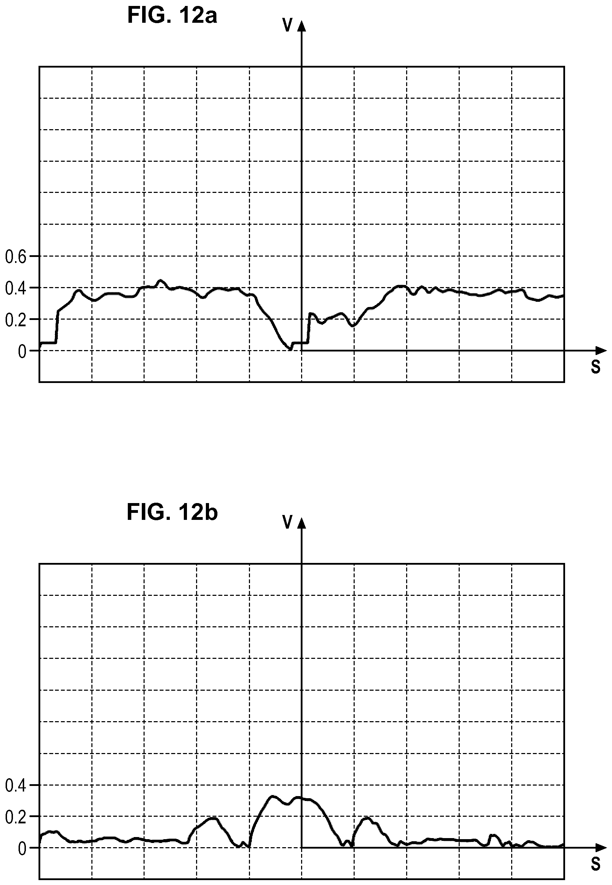

On a illustré sur les figures 11a, 11b, 12a et 12b une deuxième série de tests comparatifs montrant l'impact de cette configuration sur les fausses alarmes dues à la non uniformité du sol et/ou aux mauvais mouvements de balayage effectués par les opérateurs.

Au cours de cette deuxième série de tests, la tête de détection 10 du détecteur traditionnel et du détecteur 1 de l'invention a été passée au-dessus un sol magnétique, à 5 cm du sol. Le gain des deux détecteurs a été égalisé afin qu'ils fournissent la même intensité pour un même gain. Toutefois, dans un premier cas, la tête de détection 10 a été inclinée suivant un angle de 20° par rapport au sol, en statique (pas de mouvement de balayage - figures 11a et 11b) et dans un deuxième cas la tête de détection 10 a été inclinée suivant cet angle de 20° par rapport au sol en effectuant le même mouvement de balayage droite/gauche que pour la première série de tests (figures 12a et 12b). On notera qu'avec cet angle de 20°, pour le détecteur traditionnel, l'une parmi la bobine émettrice 12 et la bobine réceptrice 13 était plus éloignée du sol que l'autre, tandis que pour le détecteur 1 de l'invention, les deux bobines étaient inclinées de manière similaire par rapport au sol mais présentaient chacune une portion plus proche du sol et une portion plus éloignée.

Les résultats des mesures effectuées pour les deux cas, avec le détecteur traditionnel et le détecteur 1 conforme à l'invention, sont résumés dans le tableau ci-dessous :

**Tableau 2**

| | **Détecteur traditionnel Amplitude du signal** | **Détecteur 1 de l'invention Amplitude du signal** | **Amelioration** |
|---|---|---|---|
| **Cas 1: Inclinaison de 20° en statique** | 350 mV | 200 mV | 175 % |
| **Cas 2: Inclinaison de 20° en dynamique** | 400 mV | 250 mV | 160 % |

Il ressort de cette deuxième série de tests comparatifs qu'en modifiant l'orientation de la bobine émettrice 12 et de la bobine réceptrice 13 par rapport à l'axe de balayage X₀ une nette diminution de l'amplitude du signal résultant de la simple inclinaison du détecteur 1. En effet, dans le cas du détecteur traditionnel, la différence d'amplitude du signal due à la simple inclinaison, en statique, de la tête de détection, est de 350 mV, contre 200 mV dans le cas du détecteur 1 de l'invention. De même, l'amplitude du signal due au simple balayage avec inclinaison est de 400 mV pour le détecteur traditionnel, contre 250 mV pour le détecteur 1 de l'invention.

Le détecteur 1 comprend un capteur supplémentaire, de préférence un radar à pénétration de sol 60.

Dans ce cas, le radar 60 comprend une antenne émettrice 61 et une antenne réceptrice 62 configurées pour émettre et recevoir des ondes électromagnétiques dans le sol, par exemple à une fréquence comprise entre 100 MHz et 8 GHz. Lorsque ces ondes rencontrent des changements de milieux, une partie est renvoyée vers la surface et enregistrée par l'antenne réceptrice 62.

Avantageusement, grâce à l'orientation des bobines émettrice et réceptrice 12, 13 par rapport à l'axe de balayage X₀, la surface disponible au sein de chacune des boucles est plus grande. L'antenne émettrice 61 et l'antenne réceptrice 62 peuvent donc chacune être logées au centre de l'une des boucles de la bobine émettrice 12 et de la bobine réceptrice 13. De la sorte, le maximum de sensibilité du radar 60 se trouve dans la même zone que le maximum de sensibilité du capteur inductif, c'est-à-dire au niveau de la zone de couplage 14. En d'autres termes, les lobes de détection microondes du radar 60 et les lobes de détection magnétique du capteur inductif correspondent, de sorte qu'il devient possible pour un opérateur de considérer que la détection d'une cible a lieu dans la zone centrale de la tête de détection 10 lors du pointage.

Les boucles de la bobine émettrice 12 et de la bobine réceptrice 13 étant de forme allongée, les antennes 61, 62 émettrice et réceptrice 12, 13 peuvent être allongées suivant un quatrième axe X₄ parallèle au deuxième axe X₂ afin de maximiser la surface de rayonnement et donc la capacité de transmission. Par exemple, l'antenne émettrice 61 et l'antenne réceptrice 62 peuvent avoir la forme d'une spirale logarithmique qui a été allongée afin de maximiser la surface de rayonnement et le gain des antennes tout en minimisant la longueur de chaque brin 63 formant la spirale des antennes 61, 62 afin de ne pas augmenter l'impulsion. Dans une antenne à spirale logarithmique allongée, l'écartement entre les brins 63 de la spirale est en effet plus grand et croit de manière logarithmique.

Par exemple, la spirale logarithmique allongée formant les antennes 61, 62 peut présenter une hauteur d'environ 150 mm pour 80 mm.

En variante, l"antenne émettrice 61 et l'antenne réceptrice 62 du radar 60 peuvent être de l'un des types suivants : antenne radio à cornet à quadruple nervures, antenne papillon (généralement connue sous sa dénomination anglaise « bow tie »), antenne papillon rectangulaire, antenne spirale d'Archimède, antenne spirale logarithmique, antenne Vivaldi.

De manière connue en soi, l'antenne émettrice 61 et l'antenne réceptrice 62 peuvent être réalisées en cuivre, qui est un bon conducteur électrique.

Toutefois, afin réduire les risques d'oxydation des antennes, les antennes 61, 62 émettrice et réceptrice 12, 13 peuvent être en partie réalisées en nickel et/ou en chrome et en partie réalisées en cuivre. Le nickel et le chrome présentent en effet l'avantage de ne pas s'oxyder dans le temps tout en étant conducteur électriquement.

Par exemple, le centre 64 de chaque antenne 61, 62 peut être réalisé en cuivre et protégé par une couche comprenant de l'or, tandis que le reste 65 des antennes 61, 26 est réalisé en nickel et/ou en chrome. Entre la partie centrale de chaque antenne 61, 26 et le reste de l'antenne 61, 62 peut être réalisée en cuivre et recouverte d'une couche de nickel (et/ou de chrome).

Par ailleurs, afin de limiter les interactions avec les bobines émettrice et réceptrice 12, 13, une épaisseur de l'antenne émettrice 61 et de l'antenne réceptrice 62 est inférieure à l'effet de peau des bobines 12, 13. De la sorte, les antennes 61, 62 deviennent invisibles pour le champ magnétique du capteur inductif. On notera toutefois que l'épaisseur des antennes émettrice et réceptrice 12, 13 doit rester supérieure à une épaisseur limite pour garantir une robustesse mécanique suffisante des antennes 61, 62 et éviter tout risque de casse. L'épaisseur des antennes émettrice et réceptrice 61, 62 est donc choisie de manière à être comprise entre une centaine de nanomètres et un micron. Par exemple, l'antenne émettrice 61 et l'antenne réceptrice 62 peuvent présenter une épaisseur de l'ordre de 200 nm (à 10% près).

Afin de réaliser des antennes 61, 62 de cette épaisseur, on pourra notamment envisager une technique de dépôt physique par phase vapeur (habituellement désignée par son acronyme anglais PVD pour Physical Vapor Déposition). Cette technique permet en effet d'obtenir des antennes 61, 62 de très faible épaisseur avec une grande précision dimensionnelle et de réaliser plusieurs antennes à la fois.

## Revendications

1. Procédé de détection d'un objet cible à l'aide d'un détecteur (1) comprenant une tête de détection (10) comprenant un capteur inductif comprenant une bobine émettrice (12) et une bobine réceptrice (13) distinctes, la bobine émettrice (12) et la bobine réceptrice (13) formant chacune une boucle, la boucle de la bobine émettrice (12) chevauchant au moins partiellement la boucle de la bobine réceptrice (13) de manière à former une zone de couplage (14), la zone de couplage (14) étant allongée suivant une première direction longitudinale définissant un premier axe (X₁), le procédé étant **caractérisé en ce que** le détecteur (1) est déplacé le long d'une direction de balayage définissant un axe de balayage (X₀) et **en ce que**, au cours de ce déplacement, la tête de détection (10) est orientée de sorte que le premier axe (X₁) de la zone de couplage (14) est sensiblement parallèle à l'axe de balayage (X₀).

2. Détecteur (1) adapté pour être utilisé dans un procédé de détection selon la revendication 1, ledit détecteur (1) comprenant une tête de détection (10) fixée sur un manche (20) par l'intermédiaire d'une liaison mécanique (30), la tête de détection (10) comprenant :
- une plateforme (11) et
- un capteur inductif fixé sur la plateforme (11) et comprenant une bobine émettrice (12) et une bobine réceptrice (13) distinctes, la bobine émettrice (12) et la bobine réceptrice (13) formant chacune une boucle, la boucle de la bobine émettrice (12) chevauchant au moins partiellement la boucle de la bobine réceptrice (13) de manière à former une zone de couplage (14), la zone de couplage (14) étant allongée suivant une première direction longitudinale définissant un premier axe (X₁), le détecteur (1) étant **caractérisé en ce que** le manche (20) s'étend dans un plan (P₁) normal à la plateforme (11) et **en ce que** le premier axe (X₁) de la zone de couplage (14) est transversal audit plan (P₁).

3. Détecteur (1) selon la revendication 2, dans lequel chaque boucle étant sensiblement allongée suivant une deuxième direction longitudinale définissant un deuxième axe (X2), le premier axe (X1) et le deuxième axe (X2) étant sensiblement parallèles.

4. Détecteur (1) selon l'une des revendications 2 ou 3, dans lequel la tête de détection (10) est allongée et s'étend suivant le premier axe (X₁).

5. Détecteur (1) selon l'une des revendications 2 à 4, dans lequel soit la bobine émettrice (12) et la bobine réceptrice (13) comprennent des fils enroulés, la bobine émettrice (12) présentant un plus grand nombre de spires que la bobine réceptrice (13), soit la bobine émettrice (12) et la bobine réceptrice (13) sont imprimées directement sur la plateforme (11), la plateforme (11) formant alors un circuit imprimé.

6. Détecteur (1) selon l'une des revendications 2 à 5, dans lequel la bobine émettrice (12) et la bobine réceptrice (13) sont homopolaires.

7. Détecteur (1) selon l'une des revendications 2 à 6, dans lequel la liaison mécanique (30) est fixe en rotation autour d'un troisième axe (X₃), ledit troisième axe (X₃) étant compris dans le plan (P₁).

8. Détecteur (1) selon la revendication 7, dans lequel le troisième axe (X₃) est transversal au premier axe (X₁).

9. Détecteur (1) selon l'une des revendications 2 à 8, dans lequel la liaison mécanique (30) comprend une liaison pivot, une liaison encastrement ou une liaison rotule.

10. Détecteur (1) selon l'une des revendications 2 à 9, comprenant en outre une poignée (62) configurée pour être saisie par un opérateur, ladite poignée (62) s'étendant dans le plan (P1).

11. Détecteur (1) selon l'une des revendications 2 à 10, comprenant en outre un radar à pénétration de sol (60) comprenant une antenne émettrice (61) et une antenne réceptrice (62), l'antenne émettrice (61) et l'antenne réceptrice (62) étant chacune logées au centre de l'une des boucles des bobines émettrice (12) et réceptrice (13).

12. Détecteur (1) selon la revendication 11, dans lequel l'antenne émettrice (61) et l'antenne réceptrice (62) du radar (60) sont de l'un des types suivants : antenne radio à cornet à quadruple nervures, antenne papillon, antenne papillon rectangulaire, antenne spirale d'Archimède, antenne spirale logarithmique, antenne Vivaldi, antenne spirale logarithmique allongée suivant un quatrième axe (X₄) perpendiculaire au premier axe (X₁).

13. Détecteur (1) selon l'une des revendications 11 ou 12, dans lequel l'antenne émettrice (61) et l'antenne réceptrice (62) sont réalisées au moins en partie en nickel ou en chrome.

14. Détecteur (1) selon la revendication 13, dans lequel une partie centrale de l'antenne émettrice (61) et de l'antenne réceptrice (62) est réalisée en cuivre et comprend, en surface, une couche de protection réalisée en or.

15. Détecteur (1) selon l'une des revendications 11 à 14, dans lequel l'antenne émettrice (61) et l'antenne réceptrice (62) présentent une épaisseur inférieure à un micron, de préférence égale à environ 200 nm

## Patentansprüche

1. Verfahren zum Detektieren eines Zielobjekts mithilfe eines Detektors (1), der einen Detektionskopf (10) umfasst, welcher einen induktiven Sensor umfasst, der eine Sendespule (12) und eine Empfangsspule (13) umfasst, die sich voneinander unterscheiden, wobei die Sendespule (12) und die Empfangsspule (13) jeweils eine Schleife bilden, wobei sich die Schleife der Sendespule (12) mindestens teilweise mit der Schleife der Empfangsspule (13) überlappt, sodass eine Kopplungszone (14) gebildet wird, wobei die Kopplungszone (14) entlang einer ersten Längsrichtung, die eine erste Achse (X₁) definiert, langgestreckt ist, wobei das Verfahren **dadurch gekennzeichnet ist, dass** der Detektor (1) entlang einer Abtastrichtung, die eine Abtastachse (X₀) definiert, bewegt wird, und dadurch, dass während dieser Bewegung der Detektionskopf (10) so ausgerichtet wird, dass die erste Achse (X₁) der Kopplungszone (14) im Wesentlichen zur Abtastachse (X₀) parallel ist.

2. Detektor (1), der dafür geeignet ist, in einem Detektionsverfahren nach Anspruch 1 verwendet zu werden, wobei der Detektor (1) einen Detektionskopf (10) umfasst, der mittels einer mechanischen Verbindung (30) an einem Stiel (20) befestigt ist, wobei der Detektionskopf (10) umfasst:
- eine Plattform (11), und
- einen induktiven Sensor, der an der Plattform (11) befestigt ist und eine Sendespule (12) und eine Empfangsspule (13) umfasst, die sich voneinander unterscheiden, wobei die Sendespule (12) und die Empfangsspule (13) jeweils eine Schleife bilden, wobei sich die Schleife der Sendespule (12) mindestens teilweise mit der Schleife der Empfangsspule (13) überlappt, sodass eine Kopplungszone (14) gebildet wird, wobei die Kopplungszone (14) entlang einer ersten Längsrichtung, die eine erste Achse (X₁) definiert, langgestreckt ist,
wobei der Detektor (1) **dadurch gekennzeichnet ist, dass** sich der Stiel (20) in einer zur Plattform (11) normalen Ebene (P₁) erstreckt, und dadurch, dass die erste Achse (X₁) der Kopplungszone (14) quer zur Ebene (P₁) verläuft.

3. Detektor (1) nach Anspruch 2, wobei jede Schleife im Wesentlichen entlang einer zweiten Längsrichtung, die eine zweite Achse (X2) definiert, langgestreckt ist, wobei die erste Achse (X1) und die zweite Achse (X2) im Wesentlichen parallel sind.

4. Detektor (1) nach einem der Ansprüche 2 oder 3, wobei der Detektionskopf (10) langgestreckt ist und sich entlang der ersten Achse (X₁) erstreckt.

5. Detektor (1) nach einem der Ansprüche 2 bis 4, wobei entweder die Sendespule (12) und die Empfangsspule (13) gewickelte Drähte umfassen, wobei die Sendespule (12) eine größere Anzahl an Windungen aufweist als die Empfangsspule (13), oder die Sendespule (12) und die Empfangsspule (13) direkt auf die Plattform (11) gedruckt sind, wobei die Plattform (11) dann eine gedruckte Schaltung bildet.

6. Detektor (1) nach einem der Ansprüche 2 bis 5, wobei die Sendespule (12) und die Empfangsspule (13) homopolar sind.

7. Detektor (1) nach einem der Ansprüche 2 bis 6, wobei die mechanische Verbindung (30) um eine dritte Achse (X₃) herum drehfest ist, wobei die dritte Achse (X₃) in der Ebene (P₁) liegt.

8. Detektor (1) nach Anspruch 7, wobei die dritte Achse (X₃) quer zur ersten Achse (X₁) verläuft.

9. Detektor (1) nach einem der Ansprüche 2 bis 8, wobei die mechanische Verbindung (30) eine Schwenkverbindung, eine Einsteckverbindung oder eine Kugelgelenkverbindung umfasst.

10. Detektor (1) nach einem der Ansprüche 2 bis 9, der weiter einen Griff (62) umfasst, der dafür ausgelegt ist, von einem Bediener gegriffen zu werden, wobei sich der Griff (62) in der Ebene (P1) erstreckt.

11. Detektor (1) nach einem der Ansprüche 2 bis 10, der weiter ein Bodenradar (60) umfasst, das eine Sendeantenne (61) und eine Empfangsantenne (62) umfasst, wobei die Sendeantenne (61) und die Empfangsantenne (62) jeweils in der Mitte einer der Schleifen der Sende- (12) und der Empfangsspule (13) untergebracht sind.

12. Detektor (1) nach Anspruch 11, wobei es sich bei der Sendeantenne (61) und der Empfangsantenne (62) des Radars (60) um einen der folgenden Typen handelt: vierfach gerippte Funk-Hornantenne, Schmetterlingsantenne, Rechteck-Schmetterlingsantenne, Archimedische Spiralantenne, logarithmische Spiralantenne, Vivaldi-Antenne, logarithmische Spiralantenne die entlang einer zur ersten Achse (X₁) senkrecht stehenden vierten Achse (X₄) langgestreckte.

13. Detektor (1) nach einem der Ansprüche 11 oder 12, wobei die Sendeantenne (61) und die Empfangsantenne (62) mindestens zum Teil aus Nickel oder aus Chrom gefertigt sind.

14. Detektor (1) nach Anspruch 13, wobei ein mittlerer Teil der Sendeantenne (61) und der Empfangsantenne (62) aus Kupfer gefertigt ist und an der Oberfläche eine aus Gold gefertigte Schutzschicht umfasst.

15. Detektor (1) nach einem der Ansprüche 11 bis 14, wobei die Sendeantenne (61) und die Empfangsantenne (62) eine Dicke von kleiner als einem Mikrometer, vorzugsweise von gleich etwa 200 nm, aufweisen.

## Claims

1. A detection method for detecting a target object using a detector (1) comprising a detector head (10) comprising an inductive sensor comprising a transmitting coil (12) and receiving coil (13) which are distinct from each other, the transmitting coil (12) and receiving coil (13) each forming a loop, **characterised in that** the loop of the transmitter coil (12) at least partially overlaps the loop of the receiver coil (13) so as to form a coupling area (14), the coupling area (14) being elongated along a first longitudinal direction defining a first axis (X₁),
the method being **characterised in that** the detector (1) is moved along a scanning direction defining a scanning axis (X₀) and **in that** during this movement the detector head (10) is oriented so that the first axis (X₁) of the coupling area (14) is substantially parallel to the scanning axis (X₀).

2. A detector (1) adapted for use in a detection method according to claim 1, said detector (1) comprising a detector head (10) attached to a handle (20) via a mechanical link (30), the detector head (10) comprising :
- a platform (11) and
- an inductive sensor attached to the platform (11) and comprising a transmitting coil (12) and receiving coil (13) which are distinct from each other, the transmitting coil (12) and receiving coil (13) each forming a loop, the loop of the transmitting coil (12) at least partially overlapping the loop of the receiving coil (13) so as to form a coupling area (14), the coupling area (14) being elongated along a first longitudinal direction defining a first axis (X₁), the detector (1) being **characterised in that** the handle (20) extends in a plane (P₁) perpendicular to the platform (11) and **in that** the first axis (X₁) of the coupling zone (14) is transverse to said plane (P₁.

3. The detector (1) of claim 2, wherein each loop is substantially elongated along a second longitudinal direction defining a second axis (X2), the first axis (X1) and the second axis (X2) being substantially parallel.

4. A detector (1) according to any of claims 2 or 3, wherein the detector head (10) is elongate and extends along the first axis (X₁).

5. A detector (1) according to any of claims 2 to 4, wherein either the transmitting coil (12) and the receiving coil (13) comprise wound wires, the transmitting coil (12) having a greater number of turns than the receiving coil (13), or the transmitting coil (12) and the receiving coil (13) are printed directly on the platform (11), the platform (11) then forming a printed circuit.

6. A detector (1) according to any of claims 2 to 5, wherein the transmitting coil (12) and the receiving coil (13) are homopolar.

7. A detector (1) according to one of claims 2 to 6, wherein the mechanical link (30) is fixed in rotation about a third axis (X₃), said third axis (X₃) being included in the plane (P₁).

8. The detector (1) of claim 7, wherein the third axis (X₃) is transverse to the first axis (X₁).

9. A detector (1) according to any one of claims 2 to 8, wherein the mechanical link (30) comprises a pivot link, a embedded link or a ball-and-socket link.

10. A detector (1) according to any of claims 2 to 9, further comprising a handle (62) configured to be grasped by an operator, said handle (62) extending in the plane (P1).

11. A detector (1) according to any of claims 2 to 10, further comprising a ground penetrating radar (60) comprising a transmitting antenna (61) and a receiving antenna (62), the transmitting antenna (61) and the receiving antenna (62) each being housed in the centre of one of the loops of the transmitting (12) and receiving coils (13).

12. The detector (1) of claim 11, wherein the transmitting antenna (61) and the receiving antenna (62) of the radar (60) are of one of the following types: quadruple-ribbed horn radio antenna, butterfly antenna, rectangular butterfly antenna, Archimedean spiral antenna, logarithmic spiral antenna, Vivaldi antenna, logarithmic spiral antenna elongated along a fourth axis (X₄) perpendicular to the first axis (X₁).

13. A detector (1) according to any of claims 11 or 12, wherein the transmitting antenna (61) and the receiving antenna (62) are made at least in part of nickel or chrome.

14. The detector (1) according to claim 13, wherein a central part of the transmitting antenna (61) and the receiving antenna (62) is made of copper and comprises, on the surface, a protective layer made of gold.

15. A detector (1) according to any of claims 11 to 14, wherein the transmitting antenna (61) and the receiving antenna (62) have a thickness of less than one micron, preferably about 200 nm
